# EUROPEAN PATENT APPLICATION

(11) **EP 4 746 431 A1**
(43) Date of publication of application: **20.05.2026**
(21) Application number: 24843577.8
(22) Date of filing: 17.05.2024
(51) Int. Cl.: H04N 23/57, H04N 23/90, H04N 23/63, H04N 23/62, H04M 1/02

(54) **ELECTRONIC DEVICE COMPRISING CAMERA AND OPERATION METHOD THEREFOR**

(30) Priority: 17.07.2023 KR 20230092411; 28.11.2023 KR 20230167625
(71) Applicant: Samsung Electronics Co., Ltd., Suwon-si, Gyeonggi-do 16677 (KR)
(72) Inventor: KIM, Bosung, Suwon-si Gyeonggi-do 16677 (KR); KANG, Changhoon, Suwon-si Gyeonggi-do 16677 (KR); PARK, Kwangkyu, Suwon-si Gyeonggi-do 16677 (KR); CHO, Sangheum, Suwon-si Gyeonggi-do 16677 (KR)
(74) Representative: HGF
(86) International application number: PCT/KR2024/095786
(87) International publication number: WO 2025/018866

(57) **Abstract**

An electronic device according to various embodiments may comprise a plurality of cameras, a flexible display, a processor, and a memory for storing instructions. The instructions may be executed by the processor so as to cause the electronic device to execute an application, and identify that a request for acquiring image data via a first camera among the plurality of cameras has been generated from the application. The instructions may be configured to be executed by the processor so as to cause the electronic device to, in response to the identified request, initiate an operation of the first camera to acquire image data to be provided to the application, on the basis that state information of the electronic device, which is related to the form of the electronic device, indicates a first state. The instructions may be configured to be executed by the processor so as to cause the electronic device to, in response to the identified request, initiate an operation of a second camera, among the plurality of cameras, to acquire image data to be provided to the application, on the basis of the state information indicating a second state. In addition to the embodiment, various embodiments are also possible.

## Description

### [Technical Field]

Various embodiments of the disclosure relate to an electronic device including a camera and an operation method therefor.

### [Background Art]

Various types of electronic devices such as smartphones, tablet PCs, and laptops exist. To acquire and utilize images, the electronic device can include one or more cameras. To acquire images according to various conditions, the electronic device can include various types of cameras such as an ultra-wide-angle camera, a wide-angle camera, and a telephoto camera. The cameras included in the electronic device can be arranged in several directions in order to capture images in various directions.

The electronic device can include a structure that can deform the form of the electronic device including a display by using a flexible display. As the form of the electronic device changes, a relative position of a component such as a camera mounted on the electronic device can also change.

The above-described information may be provided as related art for the purpose of helping understanding of the disclosure. No claim or determination is made as to whether any of the above-described contents may be applied as prior art related to the disclosure.

### [Disclosure of Invention]

### [Solution to Problem]

An electronic device according to an embodiment may include a plurality of cameras, a flexible display, a memory for storing instructions, and at least one processor. The at least one processor may be configured to execute the instructions to execute an application, and identify that a request for acquiring image data via a first camera among the plurality of cameras has been generated from the application. The at least one processor may be configured to, in response to the identified request, initiate an operation of the first camera to acquire image data to be provided to the application, based on that state information of the electronic device, which is related to the form of the electronic device, indicates a first state. The at least one processor may be configured to, in response to the identified request, initiate an operation of a second camera, among the plurality of cameras, to acquire image data to be provided to the application, based on that the state information indicates a second state.

A method for operating an electronic device including a plurality of cameras according to an embodiment may include executing an application, and identifying that a request for acquiring image data via a first camera among the plurality of cameras has been generated from the application. The method may include, in response to the identified request, initiating an operation of the first camera to acquire image data to be provided to the application, based on that state information of the electronic device, which is related to the form of the electronic device, indicates a first state. The method may include, in response to the identified request, initiating an operation of a second camera, among the plurality of cameras, to acquire image data to be provided to the application, based on that the state information indicates a second state.

A computer-readable non-transitory recording medium according to an embodiment recording a computer program by which an electronic device including a plurality of cameras is executed to execute an application, and identify that a request for acquiring image data via a first camera among the plurality of cameras has been generated from the application. The computer program may be executed by the electronic device to, in response to the identified request, initiate an operation of the first camera to acquire image data to be provided to the application, based on that state information of the electronic device, which is related to the form of the electronic device, indicates a first state. The computer program may be executed by the electronic device to, in response to the identified request, initiate an operation of a second camera, among the plurality of cameras, to acquire image data to be provided to the application, based on that the state information indicates a second state.

### [Brief Description of Drawings]

FIG. 1 is a block diagram of an electronic device in a network environment, according to various embodiments.
FIG. 2 is a diagram for explaining a structure of an electronic device according to an embodiment.
FIG. 3 is a diagram illustrating an example of an electronic device in a flat/open state, according to an embodiment.
FIG. 4 is a diagram illustrating an example of an electronic device in a folded state, according to an embodiment.
FIG. 5 is an exploded perspective view illustrating an example of an electronic device according to an embodiment.
FIG. 6 is a diagram illustrating an example of an electronic device in a flat/open state, according to an embodiment.
FIG. 7 is a diagram illustrating an example of an electronic device in a folded state, according to an embodiment.
FIG. 8 is a diagram for explaining a state of an electronic device dependent on a folding angle of the electronic device, according to an embodiment.
FIG. 9 is a flowchart illustrating a process in which an electronic device operates a camera so as to provide images to an application, according to an embodiment.
FIG. 10 is a flowchart illustrating a process in which an electronic device operates a camera, according to an embodiment.
FIG. 11 is a flowchart illustrating a process in which an electronic device operates a camera in consideration of a facing direction of a requested camera, according to an embodiment.
FIG. 12 is a flowchart illustrating a process in which an electronic device operates a camera in consideration of when a single identifier is assigned to a plurality of devices, according to an embodiment.
FIG. 13 is a flowchart illustrating a process in which an electronic device changes a camera during a camera operation, according to an embodiment.
FIG. 14 is a flowchart illustrating an example of when a camera included in an electronic device is unavailable, according to an embodiment.
FIG. 15 is a block diagram illustrating a construction of an electronic device, according to an embodiment.

### [Mode for the Invention]

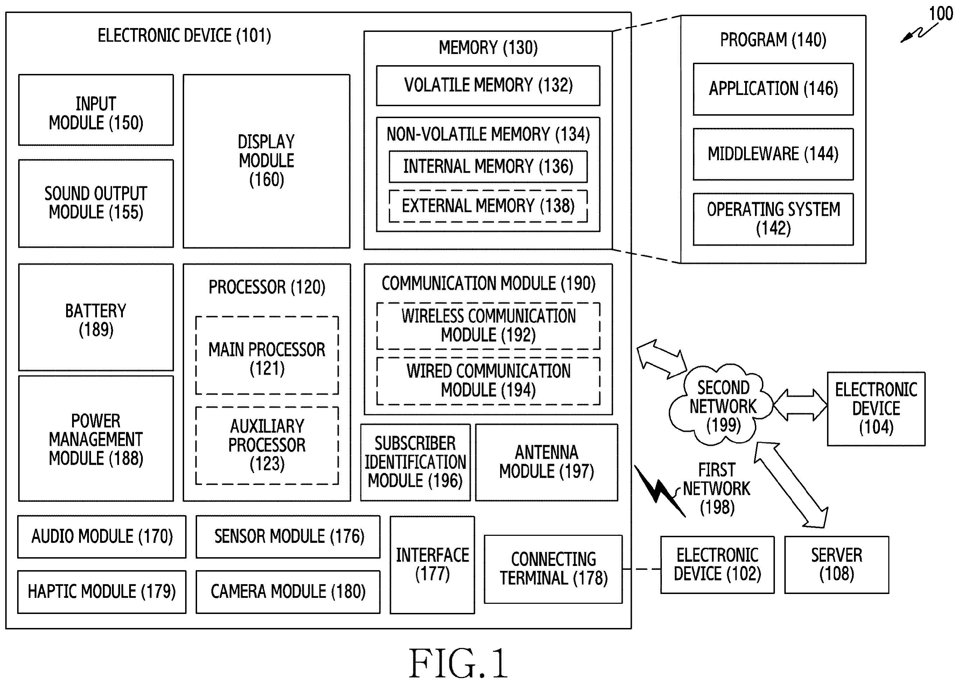

FIG. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

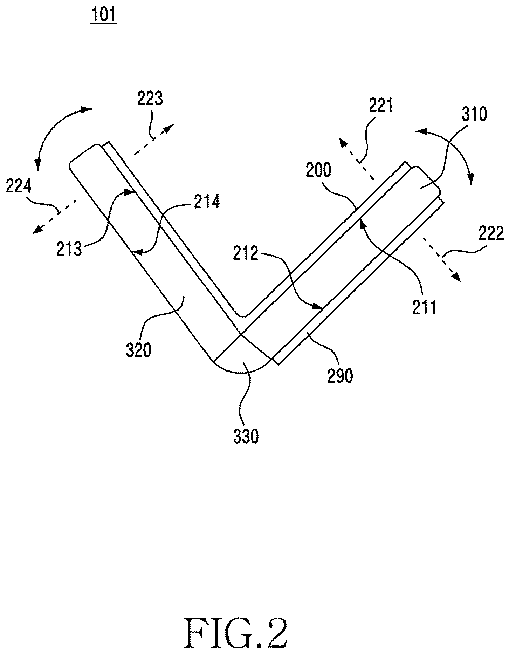

FIG. 2 is a diagram for explaining a structure of an electronic device 101 according to an embodiment.

The electronic device 101 according to an embodiment may include a first housing 310, a second housing 320, and a folding part 330. The folding part 330 may connect the first housing 310 and the second housing 320 rotatably with respect to each other. The folding part 330 may include at least a portion of a hinge structure that pivotally connects the first housing 310 to the second housing 320. The first housing 310 may form a first surface 211 and a second surface 212 opposite the first surface 211. The first housing 310 may include a frame forming at least part of the exterior of the electronic device 101. The second housing 320 may form a third surface 213 and a fourth surface 214 opposite the third surface 213. The second housing 320 may include a frame forming at least part of the exterior of the electronic device 101.

The electronic device 101 according to an embodiment may include a flexible display 200 arranged across the first surface 211 and the third surface 213. As the first housing 310 and the second housing 320 rotate with respect to each other, the form of at least a partial area of the flexible display 200 may be deformed. However, the flexible display 200 is not limited to the form illustrated in FIG. 2. The flexible display 200 may be also replaced with at least one of a display disposed on the first surface 211 or a display (e.g., rigid display) disposed on the third surface 213.

The electronic device 101 according to an embodiment may further include a display 290. The display 290 may be disposed on the second surface 212 of the first housing 310. However, the display 290 is not limited to the form illustrated in FIG. 2. For example, the display 290 may be also replaced with a display disposed on the fourth surface 214 of the second housing 320 or a flexible display arranged across the second surface 212 and the fourth surface 214.

The electronic device 101 according to an embodiment may include one or more cameras arranged in different positions. For example, the electronic device 101 may include at least one of at least one camera arranged to capture an image in a first direction 221 toward the first surface 211, at least one camera arranged to capture an image in a second direction 222 toward the second surface 212, at least one camera arranged to capture an image in a third direction 223 toward the third surface 213, or at least one camera arranged to capture an image in a fourth direction 224 toward the fourth surface 214. Each of the one or more cameras may be arranged to receive light through a transparent material (e.g., glass or plastic, but the transparent material is not limited thereto) formed on the first surface 211, the second surface 212, the third surface 213, or the fourth surface 214. Alternatively, each of the one or more cameras may be also an under display camera (UDC) arranged to receive light through the flexible display 200 or the display 290.

The electronic device 101 according to an embodiment may include a sensor (e.g., sensor module 176 of FIG. 1) for detecting an angle between the first housing 310 and the second housing 320 as the first housing 310 and the second housing 320 rotate with respect to each other. For example, the electronic device 101 may detect positions of the first housing 310 and the second housing 320 according to the rotation of the first housing 310 and the second housing 320, by using a Hall sensor arranged within the folding part 330.

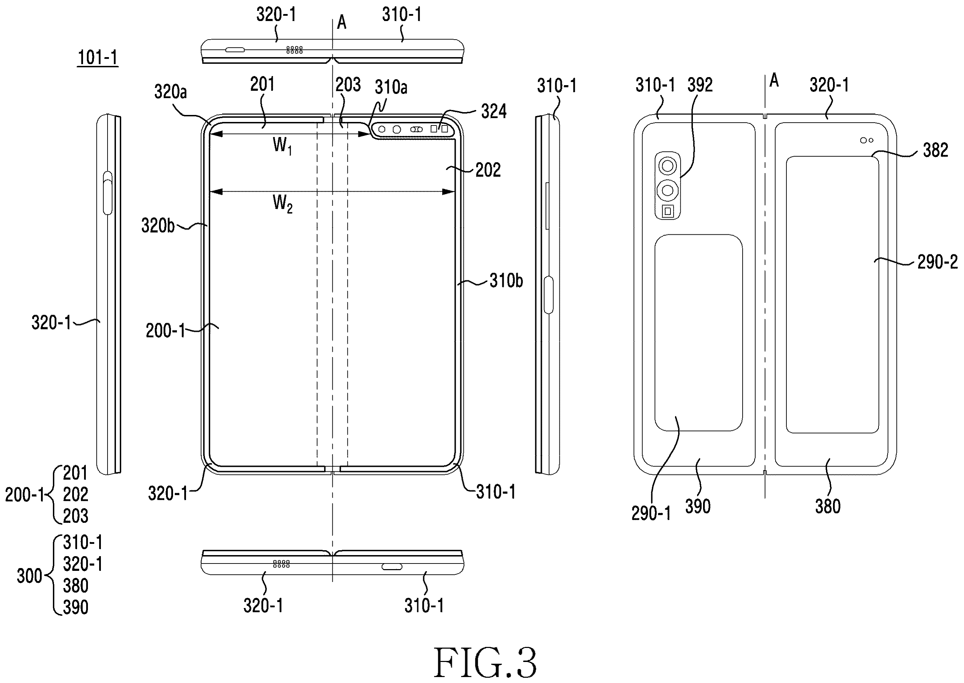

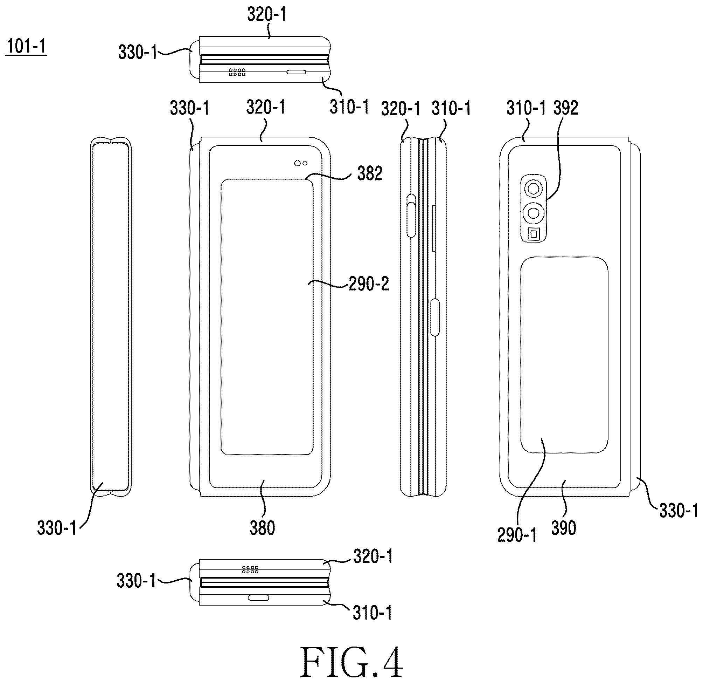

FIG. 3 is a diagram illustrating an example of an electronic device 101-1 in a flat/open state, according to an embodiment. FIG. 4 is a diagram illustrating an example of the electronic device 101-1 in a folded state, according to an embodiment.

Referring to FIGS. 3 and 4, in an embodiment, the electronic device 101-1 may include a foldable housing 300, a folding part 330 (e.g., hinge and hinge housing) covering a foldable portion of the foldable housing 300, and a flexible (or foldable) display 200-1 arranged within a space formed by the foldable housing 300. In this document, a surface on which the flexible display 200-1 is disposed may be referred to as a front surface of the electronic device 101-1. A surface opposite the front surface may be referred to as a rear surface. Additionally, a surface surrounding a space between the front surface and the rear surface may be referred to as a side surface of the electronic device 101-1.

In an embodiment, the foldable housing 300 may include a first housing structure 310-1 (e.g., first housing 310 of FIG. 2) including a sensor area 324, a second housing structure 320-1 (e.g., second housing 320 of FIG. 2), a first rear cover 390, and a second rear cover 380. The foldable housing 300 of the electronic device 101-1 is not limited to the form and coupling illustrated in FIGS. 3 and 4, and may be implemented by other shapes or a combination and/or coupling of components. For example, in an embodiment, the first housing structure 310-1 and the first rear cover 390 may be formed integrally, and the second housing structure 320-1 and the second rear cover 380 may be formed integrally.

In the illustrated embodiment, the first housing structure 310-1 and the second housing structure 320-1 may be arranged at both sides with respect to a folding axis (A), and may have a shape in which side surfaces are symmetrical with respect to the folding axis (A). As described below, an angle or distance between the first housing structure 310-1 and the second housing structure 320-1 may vary depending on whether the electronic device 101-1 is in a flat/open state, a folded state, or an intermediate state. In the illustrated embodiment, unlike the second housing structure 320-1, the first housing structure 310-1 may additionally include the sensor area 324 in which various sensors are arranged, but may have mutually symmetrical shapes in other areas. For example, at least one camera may be arranged in the sensor area 324.

In an embodiment, as illustrated in FIG. 3, the first housing structure 310-1 and the second housing structure 320-1 may together form a recess for accommodating the flexible display 200-1. In the illustrated embodiment, due to the sensor area 324, the recess may have two or more different widths in a direction perpendicular to the folding axis (A).

For example, the recess may have (1) a first width (w1) between a first portion 320a, which is parallel to the folding axis (A), of the second housing structure 320-1 and a first portion 310a formed at a periphery of the sensor area 324 of the first housing structure 310-1, and (2) a second width (w2) formed at a second portion 320b of the second housing structure 320-1 and a second portion 310b, which does not correspond to the sensor area 324 and is parallel to the folding axis (A), of the first housing structure 310-1. For example, the second width (w2) may be formed longer than the first width (w1). For example, the first portion 310a of the first housing structure 310-1 and the first portion 320a of the second housing structure 320-1 having a mutually asymmetrical shape may form the first width (w1) of the recess, and the second portion 310b of the first housing structure 310-1 and the second portion 320b of the second housing structure 320-1 having a mutually symmetrical shape may form the second width (w2) of the recess. In an embodiment, the first portion 310a and the second portion 310b of the first housing structure 310-1 may have different distances from the folding axis (A). The width of the recess is not limited to the illustrated example. In various embodiments, the recess may have a plurality of widths by the form of the sensor area 324 or an asymmetrical shape portion of the first housing structure 310-1 and the second housing structure 320-1.

In an embodiment, at least part of the first housing structure 310-1 and the second housing structure 320-1 may be formed of a metallic or non-metallic material having a rigidity of a selected level so as to support the flexible display 200-1.

In an embodiment, the sensor area 324 may be formed to have a certain area in adjacent to one corner of the second housing structure 320-1. However, the arrangement, shape, and size of the sensor area 324 are not limited to the illustrated example. For example, in an embodiment, the sensor area 324 may be provided at another corner of the second housing structure 320-1 or in any area between an upper corner and a lower corner. In an embodiment, components for performing various functions embedded in the electronic device 101-1 may be exposed on the front surface of the electronic device 101-1 through the sensor area 324 or through one or more openings provided in the sensor area 324. In various embodiments, the components may include various types of sensors. The sensors may include, for example, at least one of a front camera, a receiver, or a proximity sensor.

The first rear cover 390 may be arranged at one side of the folding axis (A) on the rear surface of the electronic device 101-1 and may have, for example, a substantially rectangular periphery, and the periphery may be surrounded by the first housing structure 310-1. Similarly, the second rear cover 380 may be arranged at the other side of the folding axis (A) on the rear surface of the electronic device 101-1, and may have a periphery surrounded by the second housing structure 320-1.

In the illustrated embodiment, the first rear cover 390 and the second rear cover 380 may have a substantially symmetrical shape with respect to the folding axis (A). However, the first rear cover 390 and the second rear cover 380 do not necessarily have the mutually symmetrical shape, and in an embodiment, the electronic device 101-1 may include the first rear cover 390 and the second rear cover 380 of various shapes. In an embodiment, the first rear cover 390 may be formed integrally with the first housing structure 310-1, and the second rear cover 380 may be formed integrally with the second housing structure 320-1.

In an embodiment, the first rear cover 390, the second rear cover 380, the first housing structure 310-1, and the second housing structure 320-1 may form a space in which various components (e.g., printed circuit board or battery) of the electronic device 101-1 may be arranged. In an embodiment, one or more components may be disposed or be visually exposed on the rear surface of the electronic device 101-1. For example, at least part of a display 290-1 may be visually exposed through the first rear cover 390. At least part of a display 290-2 may be visually exposed through a second rear area 382 of the second rear cover 380. In an embodiment, one or more components or sensors may be visually exposed through a first rear area 392 of the first rear cover 390. In various embodiments, the sensors may include a proximity sensor and/or a rear camera.

Referring to FIG. 4, a folding part 330-1 (e.g., folding part 330 of FIG. 2) may be configured to be arranged between the first housing structure 310-1 and the second housing structure 320-1 and have an internal component (e.g., hinge structure). In an embodiment, the folding part 330-1 may be hidden by part of the first housing structure 310-1 and the second housing structure 320-1 or be exposed to the outside depending on a state (flat/open state, folded state, or intermediate state) of the electronic device 101-1.

In an example, when the electronic device 101-1 is in the flat/open state as illustrated in FIG. 3, the folding part 330-1 may be hidden by the first housing structure 310-1and not be exposed to the outside. In an example, when the electronic device 101-1 is in the folded state (e.g., fully folded state) as illustrated in FIG. 4, at least part of the folding part 330-1 may be exposed to the outside between the first housing structure 310-1 and the second housing structure 320-1. In an example, when the electronic device 101-1 is in the intermediate state where the first housing structure 310-1 and the second housing structure 320-1 are folded with a certain angle, at least part of the folding part 330-1 may be exposed to the outside between the first housing structure 310-1 and the second housing structure 320-1. For example, the exposed area may be less than that in the fully folded state. In an embodiment, the folding part 330-1 may include a curved surface.

The flexible display 200-1 may be arranged in a space formed by the foldable housing 300. For example, the flexible display 200-1 may be seated on a recess formed at least partially by the foldable housing 300, and may constitute most of the front surface of the electronic device 101-1.

Therefore, the front surface of the electronic device 101-1 may include the flexible display 200-1, a partial area of the first housing structure 310-1 adjacent to the flexible display 200-1, and a partial area of the second housing structure 320-1. And, the rear surface of the electronic device 101-1 may include the first rear cover 390, a partial area of the first housing structure 310-1 adjacent to the first rear cover 390, the second rear cover 380, and a partial area of the second housing structure 320-1 adjacent to the second rear cover 380.

The flexible display 200-1 may refer to a display whose at least partial area may be deformed into a flat surface or a curved surface. In an embodiment, the flexible display 200-1 may include a folding area 203, a first area 201 arranged at one side (left side of the folding area 203 illustrated in FIG. 1) of the folding area, and a second area 202 arranged at the other side (right side of the folding area 203 illustrated in FIG. 1).

The area division of the flexible display 200-1 illustrated in FIG. 3 is exemplary, and the flexible display 200-1 may be also divided into a plurality of areas (for example, four or more or two) depending on its structure or function. In an example, in the embodiment illustrated in FIG. 3, the area of the flexible display 200-1 may be divided by the folding area 203 extending parallel to the folding axis (A) or by the folding axis (A). However, in another example, the area of the flexible display 200-1 may be also divided based on another folding area or another folding axis.

The first area 201 and the second area 202 may have an overall symmetrical shape centering on the folding area 203. However, unlike the first area 201, the second area 202 may include a notch area that is cut by the presence of the sensor area 324, but may have a shape symmetrical to the first area 201 in other areas. For example, the first area 201 and the second area 202 may include a portion having a mutually symmetrical shape and a portion having a mutually asymmetrical shape. However, this is only an example of the shape of the flexible display 220-1 and is not limited thereto.

Operations of the first housing structure 310-1 and the second housing structure 320-1 dependent on the state (e.g., flat/open state, folded state, and intermediate state) of the electronic device 101-1 and each area of the flexible display 200-1 will be described below.

In an embodiment, when the electronic device 101-1 is in the flat/open state (e.g., FIG. 3), the first housing structure 310-1 and the second housing structure 320-1 may form an angle of approximately 180 degrees. The surfaces of the first area 201 and the second area 202 of the flexible display 200-1 may face the same direction (e.g., toward the front surface of the electronic device 101-1). The folding area 203 may also form the same plane as the first area 201 and the second area 202.

In an embodiment, when the electronic device 101-1 is in the folded state (e.g., FIG. 4), the first housing structure 310-1 and the second housing structure 320-1 may be arranged to face each other. The surfaces of the first area 201 and the second area 202 of the flexible display 200-1 may form a narrow angle (e.g., angle between 0 and 10 degrees), and face each other. The folding area 203 may be formed as a curved surface, at least in part, having a certain curvature.

In an embodiment, when the electronic device 101-1 is in the intermediate state, the first housing structure 310-1 and the second housing structure 320-1 may be arranged with a certain angle. The surfaces of the first area 201 and the second area 202 of the flexible display 200-1 may form an angle that is greater than that in the folded state and is less than that in the flat/open state. The folding area 203 may be formed as a curved surface, at least in part, having a certain curvature, and the curvature may be less than that in the folded state.

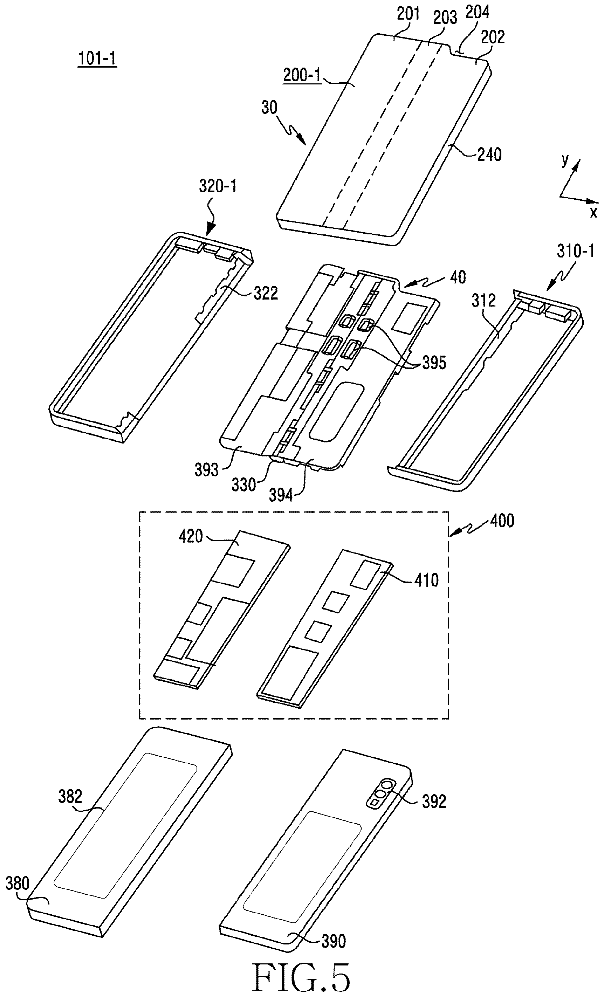

FIG. 5 is an exploded perspective view illustrating an example of an electronic device 101-1 according to an embodiment.

Referring to FIG. 5, in an embodiment, the electronic device 101-1 may include a display unit 30, a bracket assembly 40, a substrate unit 400, a first housing structure 310-1, a second housing structure 320-1, a first rear cover 390, and a second rear cover 380. In this document, the display unit 30 may be referred to as a display module or a display assembly.

The display unit 30 may include a flexible display 200-1 and one or more plates (or layers) 240 on which the flexible display 200-1 is seated. In an embodiment, the plate 240 may be arranged between the flexible display 200-1 and the bracket assembly 40. The flexible display 200-1 may be disposed on at least part of one surface (e.g., upper surface in FIG. 5) of the plate 240. The plate 240 may be formed in a shape corresponding to that of the flexible display 200-1. For example, a partial area of the plate 240 may be formed in a shape corresponding to a notch 204 of the flexible display 200-1.

The bracket assembly 40 may include a first bracket 394, a second bracket 393, a hinge structure arranged between the first bracket 394 and the second bracket 393, a hinge housing 330 (e.g., housing of the folding part 330-1 of FIG. 4) including at least a portion of the hinge structure, and a wiring member 395 (e.g., flexible printed circuit (FPC)) crossing the first bracket 394 and the second bracket 393.

In an embodiment, the bracket assembly 40 may be arranged between the plate 240 and the substrate unit 400. In an example, the first bracket 394 may be arranged between the second area 202 of the flexible display 200-1 and a first substrate 410. The second bracket 393 may be arranged between the first area 201 of the flexible display 200-1 and a second substrate 420.

In an embodiment, the wiring member 395 and at least part of the hinge structure may be arranged inside the bracket assembly 40. The wiring member 395 may be arranged in a direction perpendicular to a folding axis of the folding area 203 of the electronic device 101-1. The direction of the wiring member 395 is not limited thereto.

As mentioned above, the substrate unit 400 may include the first substrate 410 arranged at the first bracket 394 side and the second substrate 420 arranged at the second bracket 393 side. The first substrate 410 and the second substrate 420 may be arranged in a space that is formed by the bracket assembly 40, the first housing structure 310-1, the second housing structure 320-1, the first rear cover 390, and the second rear cover 380. Components for implementing various functions of the electronic device 101-1 may be disposed on the first substrate 410 and the second substrate 420.

The first housing structure 310-1 and the second housing structure 320-1 may be assembled to each other to be coupled to both sides of the bracket assembly 40 in a state in which the display unit 30 is coupled to the bracket assembly 40. As described below, the first housing structure 310-1 and the second housing structure 320-1 may be slid at both sides of the bracket assembly 40 and be coupled to the bracket assembly 40.

In an embodiment, the first housing structure 310-1 may include a first rotation support surface 312, and the second housing structure 320-1 may include a second rotation support surface 422 corresponding to the first rotation support surface 312. The first rotation support surface 312 and the second rotation support surface 322 may include curved surfaces corresponding to a curved surface included in the folding part 330-1.

In an embodiment, when the electronic device 101-1 is in the flat/open state (e.g., FIG. 3), the first rotation support surface 312 and the second rotation support surface 322 may cover the hinge housing 330, thereby preventing or minimizing the exposure of the hinge housing 330 to the rear surface of the electronic device 101-1. Meanwhile, when the electronic device 101-1 is in the folded state (e.g., FIG. 4), the first rotation support surface 312 and the second rotation support surface 322 may rotate along a curved surface included in the hinge housing 330, thereby exposing the hinge housing 330 to the rear surface of the electronic device 101-1.

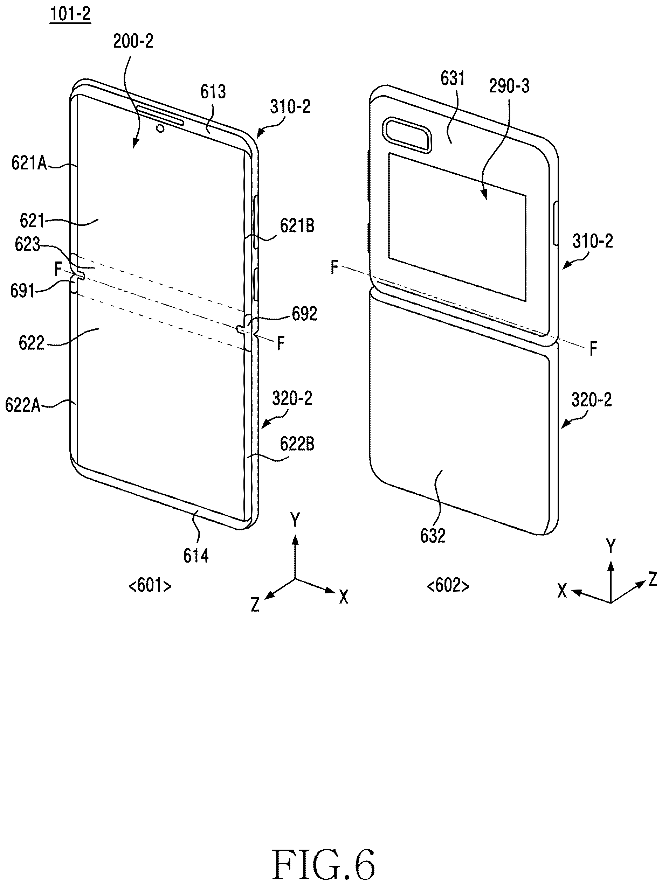

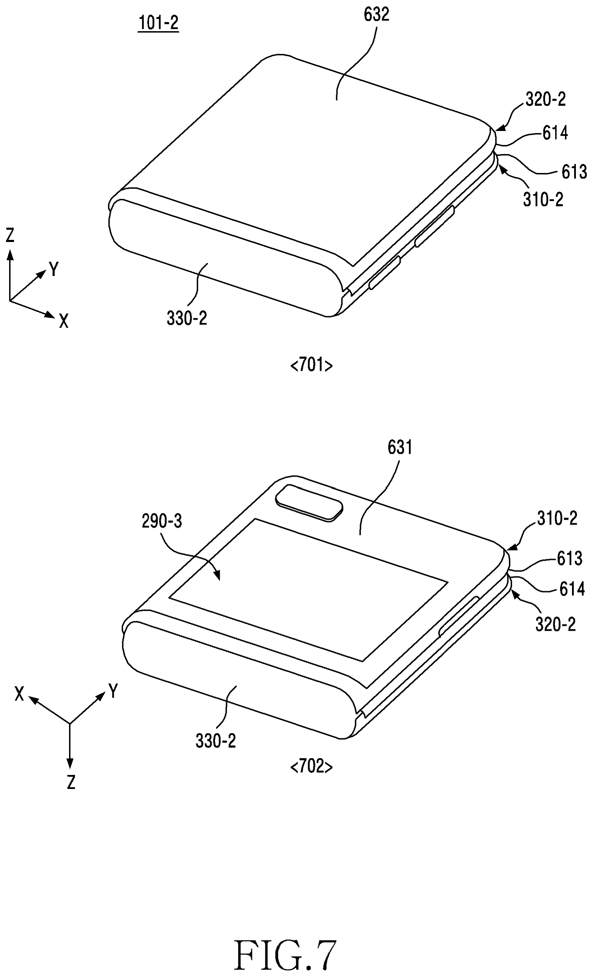

The construction of the electronic device 101-1 illustrated in FIGS. 3 to 5 is for describing an example in an embodiment, and the form of the electronic device 101-1 is not limited to that illustrated in FIGS. 3 to 5. For example, the electronic device 101 may also have the form of the electronic device 101-2 illustrated in FIGS. 6 and 7.

FIG. 6 is a diagram illustrating an example of the electronic device 101-2 in a flat/open state, according to an embodiment. FIG. 7 is a diagram illustrating an example of the electronic device 101-2 in a folded state, according to an embodiment.

Reference numeral 601 of FIG. 6 is a perspective view of the electronic device 101-2 viewed from one direction (e.g., direction facing a display 200-2) when the electronic device 101-2 is in a flat/open state. Reference numeral 602 of FIG. 6 is a perspective view of the electronic device 101-2 viewed from another direction (e.g., direction facing covers 631 and 632) when the electronic device 101-2 is in the flat/open state. Reference numeral 701 of FIG. 7 is a perspective view of the electronic device 101-2 viewed from a further another direction (e.g., direction facing the second cover 632) when the electronic device 101-2 is in a folded state. Reference numeral 702 of FIG. 7 is a perspective view of the electronic device 101-2 viewed from a yet another direction (e.g., direction facing the first cover 631) when the electronic device 101-2 is in the folded state.

According to an embodiment, a foldable housing may include a first housing 310-2 (e.g., first housing 310 of FIG. 2), a second housing 320-2 (e.g., second housing 320 of FIG. 2), and a hinge housing 330-2 (e.g., folding part 330 of FIG. 2). For example, in the flat/open state, the first housing 310-2 and the second housing 320-2 may be arranged parallel to each other. When the electronic device 101-2 is in the folded state, the first housing 310-2 and the second housing 320-2 may be rotated about a folding axis (F) such that one surface of the first housing 310-2 and one surface of the second housing 320-2 face each other. In the flat/open state, the hinge housing 330-2 may be accommodated inside the first housing 310-2 and the second housing 320-2. As the foldable housing is flat/open, the hinge housing 330-2 may be exposed to the outside.

According to an embodiment, at least part of the first housing 310-2 and the second housing 320-2 may be formed of a metallic material. Alternatively, at least part of the first housing 310-2 and the second housing 320-2 may be also formed of a non-metallic material. The first housing 310-2 and the second housing 320-2 may be formed of a material having a rigidity for supporting at least part of the display 200-2.

According to an embodiment, the first housing 310-2 and the second housing 320-2 may form a space in which electronic components (e.g., printed circuit board, antenna, battery, processor) of the electronic device 101-2 may be arranged. The first housing 310-2 and the second housing 320-2 may form a side surface (or side frame) of the electronic device 101-2. In an example, various types of components for performing various functions of the electronic device 101-2 may be arranged within the first housing 310-2 and/or the second housing 320-2. For example, electronic components such as a front camera, a receiver, and a sensor (e.g., proximity sensor) may be arranged within the first housing 310-2 and/or the second housing 320-2. Although not illustrated in the drawings, the aforementioned electronic components may be visually exposed on a front surface (e.g., z-axis direction) of the electronic device 101-2 through at least one opening or recess provided on the display 200-2.

According to an embodiment, the display 200-2 may include a flexible display. For example, the display 200-2 may be arranged across the first housing 310-2, the second housing 320-2, and the hinge housing 330-2. The display 200-2 may include a first area 621 corresponding to at least one area of the first housing 310-2, a second area 622 corresponding to at least one area of the second housing 320-2, and a folding area 623 positioned between the first area 621 and the second area 622. The display 200-2 may form one surface of the first housing 310-2 and the second housing 320-2. The electronic device 101-2 may further include a display 290-3 that is visually exposed through at least one area of the first cover 631. The display 290-3 may be arranged to be exposed through at least one area of the second cover 632, or may be arranged across the first cover 631 and the second cover 632.

According to an embodiment, at least part of the display 200-2 may form a curved surface. For example, the display 200-2 may include a first curved area 621A and a second curved area 621B that are bent from the first area 621 toward the first housing 310-2 and are extended seamlessly. For example, the first curved area 621A and the second curved area 621B may be included in both ends of an edge, adjacent to the folding axis (F), of the first area 621. The display 200-2 may include a third curved area 622A and a fourth curved area 622B that are bent from the second area 622 toward the second housing 320-2 and are extended seamlessly. For example, the third curved area 622A and the fourth curved area 622B may be included in both ends of an edge, adjacent to the folding axis (F), of the second area 622.

According to an embodiment, the first curved area 621A may extend from the first area 621 to a periphery of the first housing 310-2. The second curved area 621B may extend from the first area 621 to a periphery of the first housing 310-2. The third curved area 622A may extend from the second area 622 to a periphery of the second housing 320-2.

According to an embodiment, when viewed from a side surface (e.g., X-axis direction, -X-axis direction, Y-axis direction, or -Y-axis direction) of the electronic device 101-2, the first housing 310-2 or the second housing 320-2 may have a first thickness (or width) from a side surface (e.g., side surface where a first decorative member 613 or a second decorative member 614 is arranged, Y-axis direction, or -Y-axis direction) not including the curved areas 621A, 621B, 622A, and 622B, and may have a second thickness less than the first thickness from a side surface including the curved areas 621A, 621B, 622A, and 622B.

According to an embodiment, the end of at least one of the curved areas 621A, 621B, 622A, and 622B may be formed in a curved (or curved-line) shape. For example, the display 200-2 may include a plurality of layers. When the electronic device 101-2 changes from the flat/open state to the folded state, a slip phenomenon may occur in which the plurality of layers of the display 200-2 are pushed away from the folding axis (F) by different lengths. The slip phenomenon may occur in the first area 621 and the second area 622 adjacent to the folding area 623, but the slip phenomenon may not occur in the curved areas 621A, 621B, 622A, and 622B not directly adjacent to the folding area 623. Accordingly, in order to alleviate a stress occurring at a boundary between a portion where the slip phenomenon occurs and a portion where the slip phenomenon does not occur, curved portions may be formed at the ends of the curved areas 621A, 621B, 622A, and 622B.

According to an embodiment, the first cover 631 and the second cover 632 may be positioned at lower ends (e.g., surfaces opposite a surface on which the display 200-2 is disposed) of the first housing 310-2 and the second housing 320-2, and form a rear surface of the electronic device 101-2. In an example, the first cover 631 may be formed integrally with the first housing 310-2, and the second cover 632 may also be formed integrally with the second housing 320-2.

According to an embodiment, the electronic device 101-2 may include the first decorative member 613 (or first decorative component). For example, the first decorative member 613 may be arranged at a periphery facing in an opposite direction from a periphery adjacent to the folding area among peripheries of the first area 621. When the display 200-2 is viewed from the front surface, the first decorative member 613 may overlap at least part (e.g., upper periphery or flat periphery of the first area 621) of the periphery of the first area 621. In an example, the first decorative member 613 may be formed integrally with the first housing 310-2, or be detachably coupled to the first housing 310-2. The first decorative member 613 may extend from the first housing 310-2 to cover part of a surface of the first area 621.

According to an embodiment, the electronic device 101-2 may include the second decorative member 614 (or second decorative component). For example, the second decorative member 614 may overlap at least part (e.g., lower periphery or flat periphery of the second area 622) of a periphery of the second area 622. In an example, the second decorative member 614 may be formed integrally with the second housing 320-2, or be detachably coupled to the second housing 320-2. The second decorative member 614 may extend from the second housing 320-2 to cover part of a surface of the second area 622.

According to an embodiment, in the flat/open state, the first decorative member 613 and the second decorative member 614 may be arranged to protrude in an image output direction (e.g., Z-axis direction) of the display 200-2 from a flat surface of the display 200-2. In the folded state, due to a contact between the first decorative member 613 and the second decorative member 614, the first area 621 and the second area 622 of the display 200-2 may be spaced apart and face each other, and may reduce a damage to the display 200-2.

According to an embodiment, the first housing 310-2 may include a first protective structure 691 and a second protective structure 692. For example, the first protective structure 691 may be arranged between the first curved area 621A and the third curved area 622A of the display 200-2. The second protective structure 692 may be arranged between the second curved area 621B and the fourth curved area 622B of the display 200-2. The first protective structure 691 and the second protective structure 692 may reduce direct external impact applied to a side surface of the folding area 623. The first protective structure 691 and the second protective structure 692 may also reduce the introduction of foreign substances through the side surface of the folding area 623.

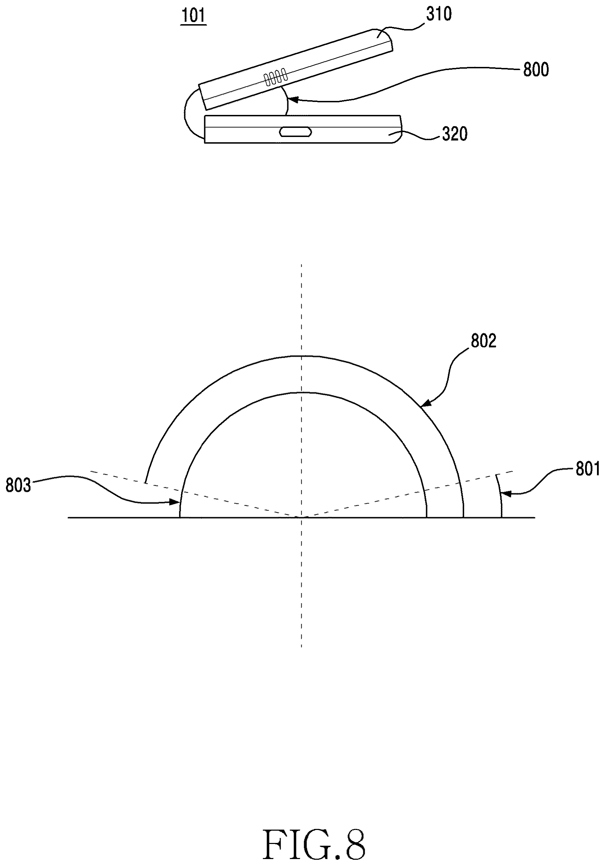

FIG. 8 is a diagram for explaining a state of an electronic device 101 dependent on a folding angle of the electronic device 101, according to an embodiment.

In this document, an angle formed by the meeting of the first housing 310 and the second housing 320 may be referred to as a first intersection angle 800. The electronic device 101 may determine a state of the electronic device 101, based on which range the first intersection angle 800 falls within. The first intersection angle 800 may also be referred to as a folding angle of the electronic device 101. For example, the electronic device 101 may determine whether the electronic device 101 is in a folded state, a flat/open state, or an intermediate state. The electronic device 101 may include a sensor (e.g., Hall sensor) for detecting the angle formed by the meeting of the first housing 310 and the second housing 320.

For example, when the first intersection angle 800 falls within a first reference angle range 801 (e.g., 0 degrees or more and less than 10 degrees), the electronic device 101 may determine that the electronic device 101 is in the folded state. When the first intersection angle 800 falls within a second reference angle range 802 (e.g., 10 degrees or more and less than 170 degrees), the electronic device 101 may determine that the electronic device 101 is in the intermediate state. When the second intersection angle 800 falls within a third reference angle range 803 (e.g., 170 degrees or more), the electronic device 101 may determine that the electronic device 101 is in the flat/open state.

However, FIGS. 2 to 8 only illustrate examples in which the electronic device 101 according to an embodiment is configured to be deformable, and the form of the electronic device 101 is not limited thereto. For example, the electronic device 101 may be also configured in the form of a rollable device in which the flexible display 200 may be rolled up and accommodated within a housing, a slidable device in which a first housing may be slid and introduced into a second housing, or a bendable device in which the flexible display 200 may be freely bent. For example, although FIGS. 2 to 8 illustrate including a structure in which two housings are connected rotatably with respect to each other via one hinge structure, the electronic device 101 may also include a structure in which three or more housings are connected rotatably with respect to each other via two or more hinge structures.

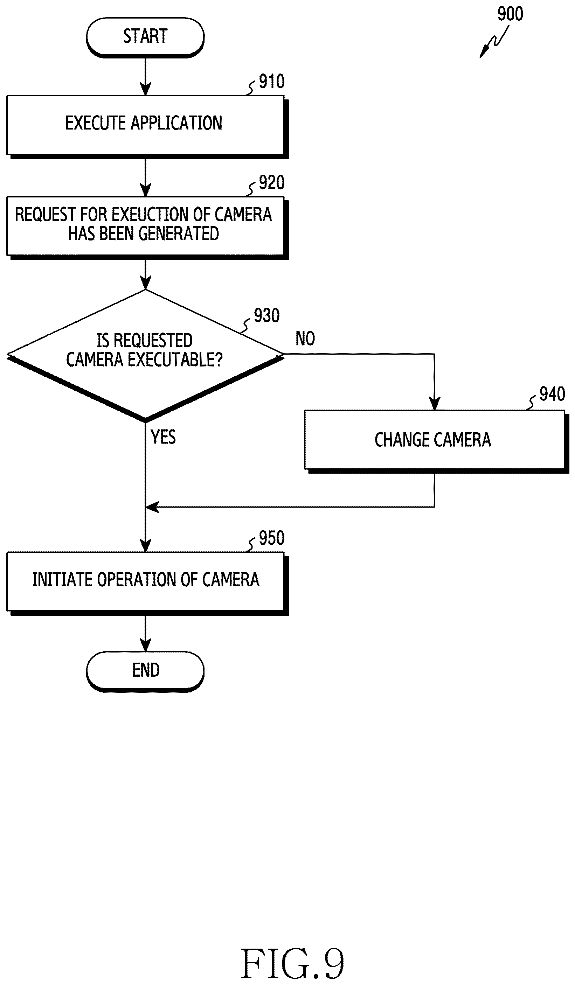

FIG. 9 is a flowchart 900 illustrating a process in which an electronic device 101 operates a camera so as to provide images to an application, according to an embodiment.

According to an embodiment, in operation 910, the electronic device 101 may execute an application, based on instructions stored in a memory (e.g., memory 130 of FIG. 1). The application may include a program that provides a function of utilizing an image acquired via at least one of cameras included in the electronic device 101 (e.g., camera module 180 of FIG. 1, camera arranged in the first rear area 392 of FIG. 3, camera arranged in the sensor area 324 of FIG. 3, camera disposed on a surface where the display 200-2 of FIG. 6 is disposed, and camera exposed through the first cover 631 of FIG. 6). For example, the application executed in operation 910 may include a camera application that provides a preview screen, based on an image acquired via at least one of the cameras, and captures a still image or a moving image. For example, the application may also include a call application that performs a video call.

According to an embodiment, in operation 920, the electronic device 101 may identify that a request for execution of a first camera has been generated from the application. For example, as the camera application is executed, the camera application may generate a request for capturing an image for displaying a preview screen by using an application programming interface (API). The request generated in operation 920 may include a first identifier (e.g., camera ID = 1) indicating a camera for capturing an image. For example, the first identifier may indicate a front camera arranged in the sensor area 324 of FIG. 3.

According to an embodiment, in operation 930, the electronic device 101 may determine whether the first camera requested in operation 920 is executable, based on state information indicating a state of the electronic device 101. The state of the electronic device 101 may include information related to the form of the electronic device 101. For example, the form of the electronic device 101 may be related to a state of a flexible display (e.g., flexible display 200 of FIG. 2). For example, the state information of the electronic device 101 may include an angle between two housings for folding at least part (e.g., folding area 203 of FIG. 3) of the flexible display (e.g., flexible display 200 of FIG. 2). The state information may include information obtained via a sensor that detects an angle between two housings included in the electronic device 101 (e.g., sensor that detects an angle by using a Hall sensor). In an example, when the camera requested is the front camera arranged in the sensor area 324 of FIG. 3, the electronic device 101 may determine that the first camera is available based on state information indicating a first state (e.g., flat/open state). In an example, when the camera requested is the front camera arranged in the sensor area 324 of FIG. 3, the electronic device 101 may determine that the first camera is unavailable based on state information indicating a second state (e.g., folded state).

According to an embodiment, the electronic device 101 may determine whether the camera requested is executed, based on a display displaying a screen or a display area where the screen is displayed. For example, referring to the electronic device 101 illustrated in FIG. 3, while displaying a preview image in the second area 202 of the flexible display 200-1, the electronic device may determine that a camera arranged to capture an image in a direction in which a surface corresponding to the second area 202 is arranged is executable. For example, when a display area where a preview image is displayed moves from a display displaying the preview image to the display 290-1 disposed on the first rear cover 390, the electronic device 101 may determine that a camera arranged in the first rear area 392 is executable.

According to an embodiment, available cameras among a plurality of cameras included in the electronic device 101 may be preset depending on at least one condition for the state information of the electronic device 101. For example, when at least part of the field of view of a camera is hidden by the electronic device 101 depending on a state of the electronic device 101, the camera may be excluded from the available cameras. For another example, when corresponding hardware (e.g., camera) is being occupied by another application depending on the state of the electronic device 101, or is not operating normally due to a failure, the electronic device 101 may also determine the hardware as an unavailable hardware.

According to an embodiment, based on the determination that the execution of the camera requested by the application is impossible, in operation 940, the electronic device 101 may change a camera to be executed in response to the request of the application. In the disclosure, an identifier assigned to the camera of the electronic device 101 may be referred to as a hardware identifier. In the disclosure, an identifier specifying a camera so as to invoke an operation related to the camera may be referred to as a logical identifier. For example, in response to that the application requests the use of a camera based on a logical identifier corresponding to a first identifier, the electronic device 101 may process a camera operation according to the request of the application by using a second camera assigned a hardware identifier corresponding to a second identifier in place of the first identifier. To operate the second camera assigned the hardware identifier corresponding to the second identifier, the electronic device 101 may change the logical identifier included in the request to correspond the logical identifier to the second identifier. For example, in response to a request for provision of image data via the execution of the first camera based on the logical identifier corresponding to the first identifier, the electronic device 101 may operate the second camera assigned the second identifier as the hardware identifier, to provide image data. The electronic device 101 may transmit attribute information of the second camera to the application so as to provide image data to the application via the second camera. The attribute information of the camera may include, for example, at least one of a resolution of the camera, the orientation of the camera, or a facing direction of the camera. The resolution of the camera may indicate a resolution of image data provided by the camera. The orientation of the camera may refer to a direction in which the camera captures an image, based on the housing of the electronic device 101. For example, based on the orientation of the camera, the electronic device 101 may determine whether up/down/left/right inversion of image data captured by the camera is required, and in which direction among a transverse direction (e.g., horizontal direction based on the horizon) or a longitudinal direction (e.g., vertical direction based on the horizon) the captured image data has been captured. The facing direction of the camera may indicate a direction in which the field of view (FOV) of the camera for capturing an image faces. For example, the facing direction of the camera may indicate a direction perpendicular to one surface of a housing in which a camera lens is arranged.

According to an embodiment, in operation 950, the electronic device 101 may initiate an operation of the second camera, based on the changed logical identifier. To initiate an operation of the camera, the electronic device 101 may set a parameter for the operation of the camera, and allow the camera to perform a capturing operation, based on the set parameter. After the operation of the second camera is initiated, the application may acquire image data via the second camera, based on the request including the logical identifier corresponding to the first identifier.

According to an embodiment, based on the determination that the execution of the first camera requested by the application is possible in operation 930, the electronic device 101 may initiate an operation of the first camera in operation 950.

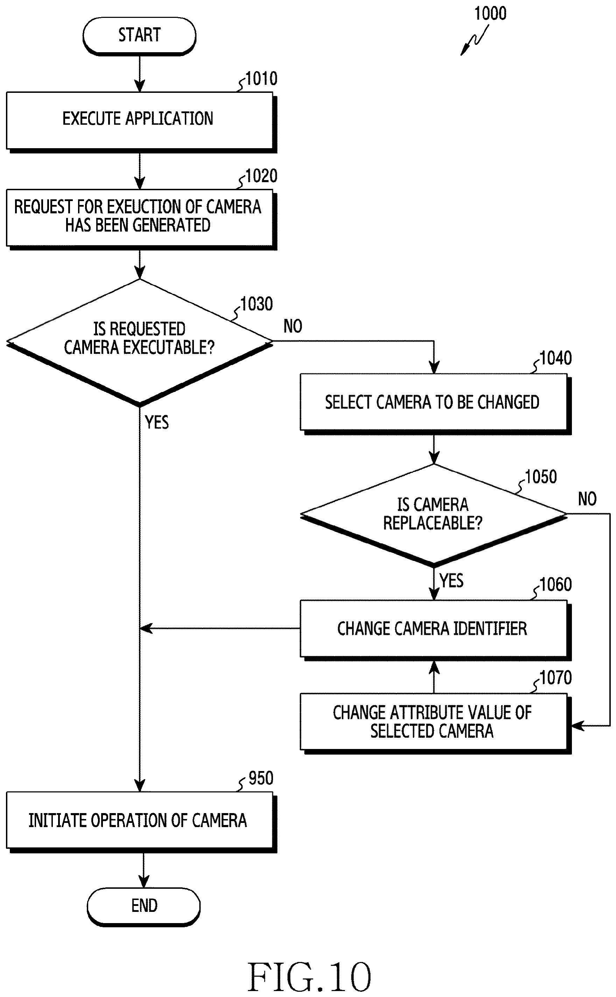

FIG. 10 is a flowchart illustrating a process in which an electronic device 101 operates a camera, according to an embodiment.

According to an embodiment, in operation 1010, the electronic device 101 may execute an application, based on instructions stored in a memory (e.g., memory 130 of FIG. 1). The application may include a program that provides a function of utilizing an image acquired via at least one of cameras included in the electronic device 101 (e.g., camera module 180 of FIG. 1, camera arranged in the first rear area 392 of FIG. 3, camera arranged in the sensor area 324 of FIG. 3, camera disposed on a surface where the display 200-2 of FIG. 6 is disposed, and camera exposed through the first cover 631 of FIG. 6). For example, the application executed in operation 1010 may include a camera application that provides a preview screen, based on the image acquired via at least one of the cameras, and captures a still image or a moving image. For example, the application may also include a call application that performs a video call.

According to an embodiment, in operation 1020, the electronic device 101 may identify that a request for execution of a first camera has been generated from the application. For example, to acquire an image captured via the first camera (e.g., camera facing a surface on which a flexible display of the electronic device 101 is disposed), the electronic device 101 may request the operation of the first camera. The request for the operation of the first camera may include a logical identifier corresponding to a first identifier indicating the first camera.

According to an embodiment, in operation 1030, the electronic device 101 may determine whether the first camera requested is executable based on state information. For example, the electronic device 101 may determine an executable camera, based on state information. The electronic device 101 may determine whether the first camera requested for use by the application is executable in a current state.

In an embodiment, based on the determination that the first camera requested is not executable, the electronic device 101 may select a camera to be changed as a camera for capturing images via the application in operation 1040. Based on the state information of the electronic device 101, the electronic device 101 may select a second camera having, in a current state, a facing direction corresponding to a facing direction of the first camera requested by the application. For example, when the first camera is arranged to face a first direction (e.g., first direction 221 of FIG. 2) of a surface on which a flexible display (e.g., flexible display 200 of FIG. 2) is disposed in a flat/open state of the electronic device 101, the electronic device 101 may select the second camera arranged to face a second direction (e.g., second direction 222 of FIG. 2) in which another display (e.g., display 290 of FIG. 2) is arranged, in place of the first camera, in a folded state of the electronic device 101.

According to an embodiment, in operation 1050, the electronic device 101 may determine whether the second camera selected may replace the first camera requested by the application. The electronic device 101 may compare attribute information of the first camera with attribute information of the second camera, and determine whether the second camera may capture an image that the application intends to capture via the first camera. For example, the electronic device 101 may determine whether the current orientation of the second camera matches the basic orientation of the first camera. The basic orientation may refer to a posture in which the camera is arranged in a direction of capturing an image in a reference state of the electronic device 101. For example, the basic orientation may refer to a posture in which the first camera is arranged in the flat/open state of the electronic device 101. In the folded state of the electronic device 101, the second camera may be arranged in a direction of capturing an image in the same or parallel direction to a direction in which the first camera in the flat/open state faces, but, since the folded state of the electronic device 101 is a state in which the second camera is rotated 180 degrees compared to the flat/open state, the current orientation of the second camera may be different up/down or left/right from the basic orientation of the first camera. When the current orientation of the second camera is different from the basic orientation of the first camera, when capturing an image via the second camera, the electronic device 101 may acquire an image changed in a transverse/longitudinal direction or inverted up/down or left/right from an image that the application intended to acquire. When the current orientation of the second camera is different from the basic orientation of the first camera, the electronic device 101 may determine that the second camera does not replace the first camera.

According to an embodiment, when the second camera selected has an attribute that may replace the first camera, the electronic device 101 may change a logical identifier for identifying a camera to be used to perform an operation corresponding to the request of the application, so as to allow the second camera to provide image data to the application. For example, the logical identifier for the camera included in the request of the application may be changed by a framework for performing operations of cameras (e.g., first camera and second camera) mounted on the electronic device 101. The application may acquire image data via a camera that is driven based on the changed logical identifier.

According to an embodiment, when the attribute of the second camera selected may not replace the attribute of the first camera, in operation 1070, the electronic device 101 may change an attribute value included in attribute information of the second camera selected. For example, the electronic device 101-2 illustrated in FIGS. 6 and 7 may include a first camera disposed to face the first direction 221 on the surface where the flexible display 200-2 of the first housing 310-2 is disposed, and a second camera disposed to face the second direction 222 on the first cover 531. In the folded state of the electronic device 101-2 illustrated in FIG. 7, the second camera may be arranged in the orientation inverted up/down/left/down compared to the flat/open state illustrated in FIG. 6. When the second camera is selected as a camera replacing the first camera in the folded state, the electronic device 101-2 may change the attribute information of the second camera such that the orientation of the second camera is inverted up/down/left/right. In operation 1060, the electronic device 101 may change the logical identifier for identifying the camera to correspond the logical identifier to the second camera, such that the application may acquire image data via the second camera whose attribute information has been changed. In operation 950, the electronic device 101 may initiate an operation of the second camera whose attribute information has been changed.

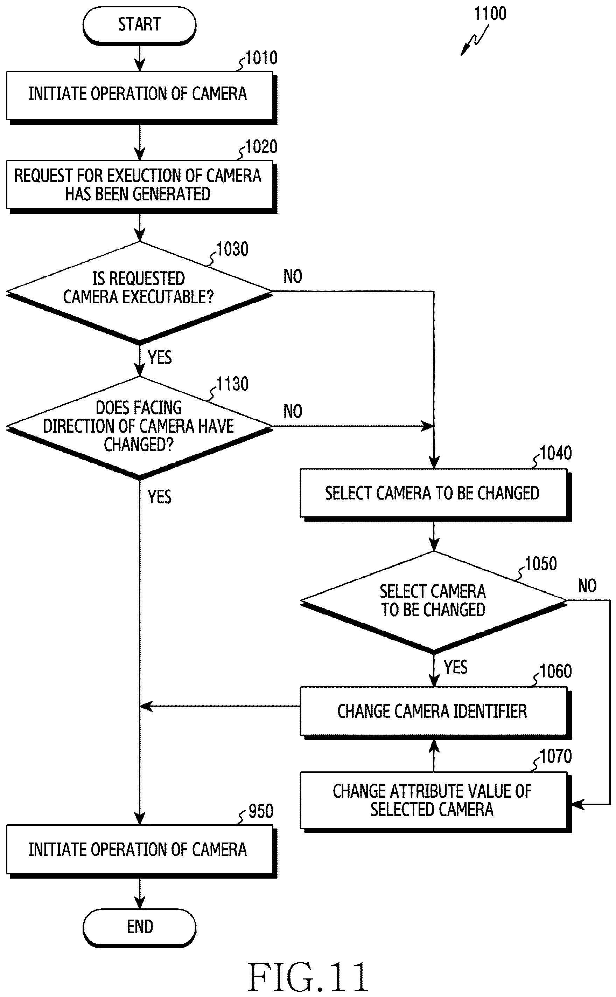

FIG. 11 is a flowchart illustrating a process in which an electronic device 101 operates a camera in consideration of a facing direction of a requested camera, according to an embodiment.

According to an embodiment, when the electronic device 101 determines that a camera requested by an application is executable in operation 1030, the electronic device 101 may determine whether a facing direction of the requested camera has changed in operation 1130. For example, in a folded state such as the electronic device 101-1 illustrated in FIG. 4 and the electronic device 101-2 illustrated in FIG. 7, a direction in which the camera faces may change compared to a flat/open state such as the electronic device 101-1 illustrated in FIG. 3 or the electronic device 101-2 illustrated in FIG. 6. When the electronic device 101 captures an image based on the camera requested by the application without considering the change of the facing direction of the camera, the electronic device 101 may acquire an image different from the image intended by the application. Therefore, when the facing direction of the camera has changed from a direction that is set as a default value, the electronic device according to an embodiment may perform operation 1040 so as to change the camera for capturing image data. The default value for the facing direction of the camera may be information indicating a direction in which the camera captures an image in a reference state of the electronic device 101. For example, the default value may be information indicating a direction in which the camera looks to capture an image in the flat/open state of the electronic device 101.

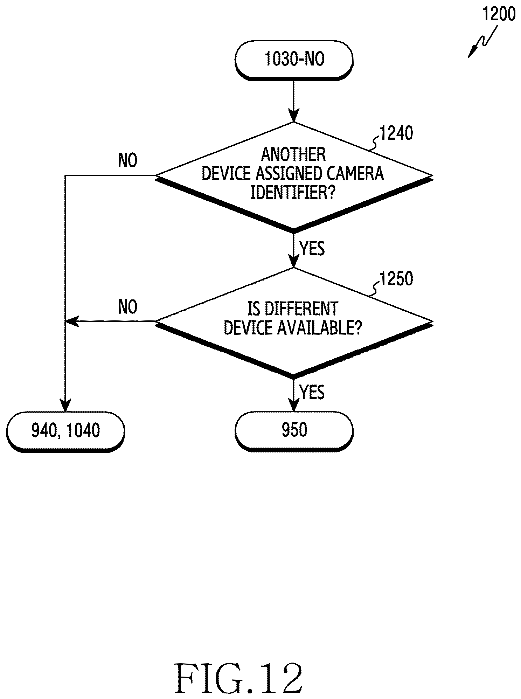

FIG. 12 is a flowchart 1200 illustrating a process in which an electronic device 101 operates a camera in consideration of when a single identifier (hardware identifier) is assigned to a plurality of devices, according to an embodiment.

In an embodiment, the electronic device 101 may determine whether a first camera assigned a hardware identifier corresponding to a logical identifier included in a request of an application is executable in operation 1030 of FIG. 10 or FIG. 11. For example, when the logical identifier included in the request of the application is '1', the electronic device 101 may determine whether the first camera assigned the identifier of '1' among cameras arranged in the first direction 221 of the electronic device 101 is executable. When the electronic device 101 determines that the first camera requested by the application is not executable in operation 930 of FIG. 9 or operation 1030 of FIG. 10 or 11, the electronic device 101 may determine in operation 1240 whether there is another device (camera) assigned the hardware identifier assigned to the camera requested by the application. For example, the electronic device 101 may assign the same hardware identifier (e.g., camera ID = 1) to the first camera arranged in the first direction 221 of FIG. 2 and the second camera arranged in the second direction 222 of FIG. 2. When there is no other camera assigned the same hardware identifier as that of the first camera requested by the application, the electronic device 101 may perform operation 940 or operation 1040 for operating the second camera in place of the first camera.

In an embodiment, when it is determined that the first camera requested by the application is not executable normally, and it is determined that there is another device assigned the hardware identifier of the first camera, the electronic device 101 may determine whether another device is available in operation 1250. When another camera assigned the same identifier as the hardware identifier of the first camera is available normally, the electronic device 101 may initiate an operation of another camera in operation 950, so as to provide image data to the application, based on another camera. When another camera is not available normally, the electronic device 101 may perform operation 940 or operation 1040 for operating the second camera in place of the first camera.

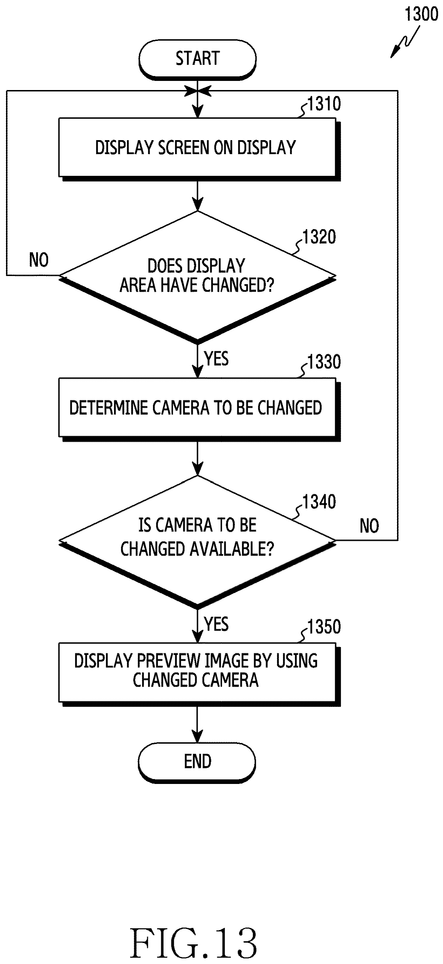

FIG. 13 is a flowchart 1300 illustrating a process in which an electronic device 101 changes a camera during an operation of the camera, according to an embodiment.

In an embodiment, the electronic device 101 may operate a camera, based on an application that is being executed in the electronic device 101. While the camera is operating, the electronic device 101 may display a screen via at least part of a display (e.g., flexible display 200 of FIG. 2, flexible display 200-1 of FIG. 3, or flexible display 200-2 of FIG. 6) of the electronic device. For example, the electronic device 101 may display a preview image corresponding to image data acquired via the first camera.

In an embodiment, the electronic device 101 may perform operation 1320 of identifying whether a display area in which the screen displayed in operation 1310 is displayed has changed. For example, when the screen displayed on the flexible display (e.g., flexible display 200 of FIG. 2, flexible display 200-1 of FIG. 3, or flexible display 200-2 of FIG. 6) of the electronic device 101 is displayed on another display (e.g., display 290 of FIG. 2, display 290-1 or 290-2 of FIG. 3, or display 290-3 of FIG. 6), the electronic device 101 may determine that the display area has changed. For example, when the electronic device 101 includes a plurality of housings connected rotatably with respect to each other, when a screen displayed in a first area (e.g., first area 201 of FIG. 3 or first area 621 of FIG. 6) corresponding to a first housing moves to a second area (e.g., second area 202 of FIG. 3 or second area 622 of FIG. 6) corresponding to a second housing, the electronic device 101 may determine that the display area has changed. When the display area has not changed, the electronic device 101 may maintain operation 1310 of displaying the screen on the display.

In an embodiment, when the display area has changed, the electronic device 101 may perform operation 1330 of determining a camera to operate depending on the changed display area. In operation 1330, the electronic device 101 may determine the camera to operate based at least in part on state information of the electronic device 101. For example, referring to FIG. 3, when the display area moves from the first area 201 of the flexible display 200-1 to the display 290-1 disposed on the first rear cover 390 while the electronic device 101 including the first housing 310 and the second housing 320 is in the intermediate state, the electronic device 101 may determine a camera arranged in the first rear area 392 as a camera for providing image data to the application.

In an embodiment, the electronic device 101 may perform operation 1340 of determining whether the camera to be changed is available. When it determined that the camera to be changed is unavailable, the electronic device 101 may perform operation 1310 while maintaining an operation of the existing camera, or may display a notification indicating that the camera has not been converted. Based on the determination that the camera to be changed is available, the electronic device 101 may initiate an operation of the changed camera. The electronic device 101 may provide image data acquired via the changed camera to the application. For example, the application may display a preview image via the display, based on the acquired image data.

According to an embodiment, based on a setting for image capturing that is set prior to a change of the camera, the electronic device 101 may determine a camera to be changed, or a setting value for capturing an image based on the camera to be changed. For example, while displaying a screen related to an image acquired based on a first camera in a flat/open state of the electronic device 101, the electronic device 101 may determine whether a running application is not terminated and is maintained in a running state, based on changing to a folded state of the electronic device 101. When the running state of the application is maintained, the electronic device 101 may identify information about a setting for image capturing based on a first camera, based on the running application. The electronic device 101 may determine a camera to be changed, based on the identified information about the setting. For example, when the electronic device 101 is changed to the folded state (or when the camera is changed) while capturing an image via the first camera in a capturing mode of capturing an image based on a wide angle of view in operation 1310, the electronic device 101 may determine a camera that supports image capturing based on the wide angle of view among executable cameras, as the camera to be changed. For example, in operation 1350, the electronic device 101 may capture an image via the second camera that has been changed based on a setting value (e.g., whether to apply Bokeh effect, portrait/landscape mode, filter setting for applying an image effect, zoom ratio, and camera operation mode) prior to camera change.

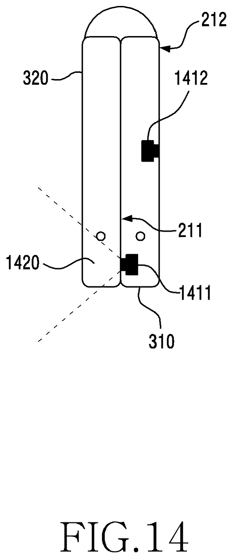

FIG. 14 is a flowchart illustrating an example of when a camera included in an electronic device 101 is unavailable, according to an embodiment.

In an embodiment, the electronic device 101 may include a first camera 1411 disposed on a first surface 211 of a first housing 310 and a second camera 1412 disposed on a second surface 212 of the first housing 310. Referring to FIG. 14, when the first housing 310 and the second housing 320 are in a folded state, at least part of the field of view 1420 of the first camera 1411 is hidden by the second housing 320. Therefore, when image capturing is performed using the first camera 1411, normal capturing may not be performed in an area hidden by the second housing 320. As illustrated in FIG. 14, when the electronic device 101 includes the first camera 1411 and the second camera 1412, the electronic device 101 may be configured to determine that, in the folded state, the first camera 1411 is unavailable and the second camera 1412 is available.

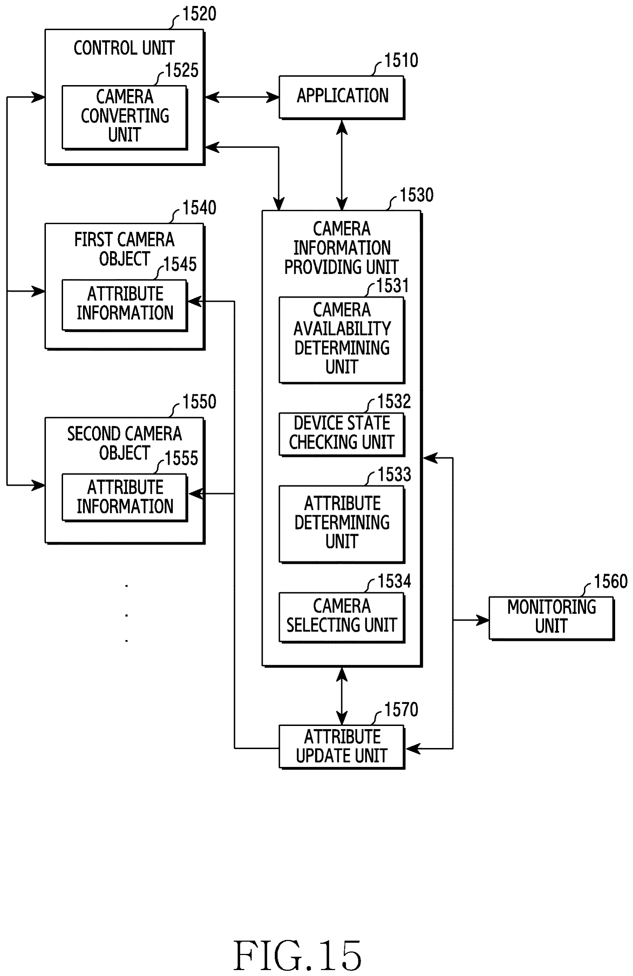

FIG. 15 is a block diagram illustrating a construction of an electronic device 101 according to an embodiment.

In an embodiment, the electronic device 101 may include an application 1510, a control unit 1520, an information providing unit 1530, a first camera object 1540, a second camera object 1550, a monitoring unit 1560, and an attribute update unit 1570. The components illustrated in FIG. 15 may include a module configured as hardware, software, or a combination of hardware and software.

In an embodiment, the application 1510 may include a program that uses a camera. The application 1510 may control a camera included in the electronic device 101 by using an API provided by the electronic device 101. The application 1510 may open a camera object by using an identifier for the camera and obtain attribute information about the camera. The application 1510 may control the camera, based on the obtained attribute information.

In an embodiment, when a request for operating the camera has been generated from the application 1510 via the API, the control unit 1520 may operate the camera and process a requested task. The control unit 1520 may provide image data to the application 1510 as a result of processing the request, or may respond to the request. For example, when a request for image data of a specific size is received from the application 1510, the control unit 1520 may determine whether an image of the specific size may be provided via the camera included in the electronic device 101, and provide the image data of the size requested by the application 1510 to the application 1510.

In an embodiment, the control unit 1520 may include a camera converting unit 1525. The camera converting unit 1525 may convert a camera that operates to acquire normal image data depending on state information of the electronic device 101. The camera converting unit 1525 may select a camera corresponding to the state information, based on information obtained from the information providing unit.

In an embodiment, the electronic device 101 may include the camera object 1540 and 1550 for a plurality of cameras. The camera object 1540 and 1550 may also be referred to as camera modules. camera object 1540 and 1550 may include attribute information 1545 and 1555 about respective cameras, respectively. The attribute information 1545 or 1555 about the camera may include, for example, at least one of an identifier assigned to identify the camera, a facing direction of the camera, the orientation of the camera, a resolution, whether to support an auto focus (AF) function, whether to mount a flash module, or aperture information. However, an example of the attribute information 1545 or 1555 is not limited thereto.

In an embodiment, the camera information providing unit 1530 may provide information related to an operation of the camera to the control unit 1520 or the application 1510. The camera information providing unit 1530 may include a camera availability determining unit 1531, a device state checking unit 1532, an attribute determining unit 1533, and a camera selecting unit 1514. The camera availability determining unit 1531 may determine a camera that is currently available among cameras included in the electronic device 101, based on state information of the electronic device 101. The device state checking unit 1532 may determine a state of the electronic device 101, based on information monitored by the monitoring unit 1560, and provide the state of the electronic device 101 to the control unit 1520. For example, the device state checking unit 1532 may determine a display area that is being used as a primary display, based on information for controlling a display to display a screen in the electronic device 101. For example, the device state checking unit 1532 may determine at least one of a facing direction of the camera or a folding state of a housing, based on a folding angle between two housings acquired by the monitoring unit 1560. Based on a request of the application 1510, the attribute determining unit 1533 may request the attribute determining unit 1570 to determine or update attribute information about an available camera selected by the camera selecting unit 1534. The camera selecting unit 1514 may determine a camera to operate to process the request of the application 1510 among cameras determined to be available by the camera availability determining unit 1531. When the determined camera is different from a camera requested by the application 1510, the camera selecting unit 1514 may change a logical identifier for identifying a camera to be used to perform an operation according to the request such that image data may be provided via the determined camera.

In an embodiment, the monitoring unit 1560 may monitor information related to a state of the electronic device 101. For example, the monitoring unit 1560 may monitor information about a folding angle from a sensor that detects an angle between two housings included in the electronic device 101. For example, the monitoring unit 1560 may also monitor information about a display, which is being used as a primary display so as to display a screen, among a plurality of displays included in the electronic device 101.

In an embodiment, the attribute update unit 1570 may update attribute information for controlling a camera included in the electronic device 101. The attribute update unit 1570 may update the attribute information 1545 and 1555 depending on a request of the information providing unit 1530. For example, when the state of the electronic device 101 changes from a flat/open state to a folded state, the attribute update unit 1570 may update the attribute information 1545 and 1555. When the attribute information 1545 of the first camera 1540 is updated while the application 1510 is using the first camera 1540, the attribute update unit 1570 may transmit the updated attribute information 1545 to the application 1510 in a callback format.

An electronic device including a camera according to an embodiment may change a relative position of the camera as the form of the electronic device changes. As the form of the electronic device changes, a camera lens may be hidden by other structures, preventing normal capturing. However, when an application installed in the electronic device is developed without considering the availability of the camera according to the device's form change, a camera appropriate for image capturing requested by an application may fail to operate, at a time when the application requests the image capturing via the camera.

The technical task to be achieved in this document is not limited to the technical tasks mentioned above, and other technical tasks not mentioned will be clearly understood by those skilled in the art to which the disclosure pertains from the description of the disclosure.

An electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) according to an embodiment may include a plurality of cameras, a flexible display, a processor, and a memory for storing instructions. The instructions may be configured to be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to execute an application, and identify that a request for acquiring image data via a first camera among the plurality of cameras has been generated from the application. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in response to the identified request, initiate an operation of the first camera to acquire image data to be provided to the application, based on that state information of the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7), which is related to the form of the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7), indicates a first state. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in response to the identified request, initiate an operation of a second camera, among the plurality of cameras, to acquire image data to be provided to the application, based on that the state information indicates a second state.

In an embodiment, the request may include a first identifier indicating the first camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in response to the request, change an identifier for identifying a camera to be used to perform an operation corresponding to the request, from the first identifier to a second identifier assigned to the second camera, based on that the state information indicates the second state.

The electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) according to an embodiment may further include a first housing forming a first surface and a second surface opposite the first surface, a second housing forming a third surface and a fourth surface opposite the third surface, a folding part connecting the first housing and the second housing rotatably with respect to each other; and a sensor for detecting a folding angle between the first housing and the second housing. The state information may include information associated with the folding angle.

In an embodiment, the first camera may be arranged to capture an image through the first surface. The second camera may be arranged to capture an image through the second surface. The second state may be that the folding angle is within a first angle range such that the first camera is covered by the second housing.

The electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) according to an embodiment may further include an additional display at least partially arranged along the second surface of the first housing. The flexible display may be at least partially arranged along the first surface of the first housing and the third surface of the second housing. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in response to the identified request, initiate the operation of the second camera, based on that the state information indicates the second state and that a screen outputting a screen associated with the application is the additional display.

In an embodiment, the instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in response to the identified request, select the second camera from the plurality of cameras, based on that the state information indicates the second state. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to determine whether the second camera corresponds to an attribute of the first camera, based on attribute information about the second camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, when the second camera does not correspond to the attribute of the first camera, change the attribute information of the second camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to initiate the operation of the second camera, based on the changed attribute information.

In an embodiment, the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) may further include a plurality of displays. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, in a state in which the first camera is activated, display a screen via the flexible display. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to identify that a display displaying the screen has changed from the flexible display to at least one of the plurality of displays. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to initiate the operation of the second camera, based on the change of the display displaying the screen.

In an embodiment, the instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to identify the second camera assigned a first identifier indicating the first camera, based on that the state information indicates the second state. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to determine whether the second camera is in use, based on attribute information of the second camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to initiate the operation of the second camera, based on the determination that the second camera is in use.

In an embodiment, the instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to determine whether a facing direction of the first camera determined based on the state information corresponds to a direction preset for the first camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, when the facing direction of the first camera corresponds to the preset direction, initiate the operation of the first camera. The instructions may be executed by the processor so as to cause the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) to, when the facing direction of the first camera does not correspond to the preset direction, initiate the operation of the second camera.

A method for operating an electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) including a plurality of cameras according to an embodiment may include executing an application, and identifying that a request for acquiring image data via a first camera among the plurality of cameras has been generated from the application. The method may include, in response to the identified request, initiating an operation of the first camera to acquire image data to be provided to the application, based on that state information of the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7), which is related to the form of the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7), indicates a first state. The method may include, in response to the identified request, initiating an operation of a second camera, among the plurality of cameras, to acquire image data to be provided to the application, based on that the state information indicates a second state.

In an embodiment, the request may include a first identifier indicating the first camera. The initiating of the operation of the second camera may include, in response to the request, changing an identifier for identifying a camera to be used to perform an operation corresponding to the request, from the first identifier to a second identifier assigned to the second camera, based on that the state information indicates the second state.

The electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) according to an embodiment may further include a first housing forming a first surface and a second surface opposite the first surface, a second housing forming a third surface and a fourth surface opposite the third surface, a folding part connecting the first housing and the second housing rotatably with respect to each other, and a sensor for detecting a folding angle between the first housing and the second housing. The state information may include information associated with the folding angle.

In an embodiment, the second state is that the folding angle is within a first angle range such that the first camera is covered by the second housing.

In an embodiment, the electronic device (e.g., electronic device 101 of FIG. 1, electronic device 101 of FIG. 2, electronic device 101-1 of FIG. 3 or FIG. 5, or electronic device 101-2 of FIG. 6 or FIG. 7) may further include an additional display. The initiating of the operation of the second camera may include, in response to the identified request, initiating the operation of the second camera, based on that the state information indicates the second state and that a screen outputting a screen associated with the application is the additional display.

In an embodiment, the initiating of the operation of the second camera may include, in response to the identified request, selecting the second camera from the plurality of cameras, based on that the state information indicates the second state. The initiating of the operation of the second camera may include determining whether the second camera corresponds to an attribute of the first camera, based on attribute information about the second camera. The initiating of the operation of the second camera may include, when the second camera does not correspond to the attribute of the first camera, changing the attribute information of the second camera. The initiating of the operation of the second camera may include initiating the operation of the second camera, based on the changed attribute information.

In an embodiment, the electronic device may further include a plurality of displays. The method may include, in a state in which the first camera is activated, displaying a screen via the flexible display. The method may include identifying that a display displaying the screen has changed from the flexible display to at least one of the plurality of displays. The method may further include initiating the operation of the second camera, based on the change of the display displaying the screen.

In an embodiment, the method may include identifying the second camera assigned a first identifier indicating the first camera, based on that the state information indicates the second state. The method may include determining whether the second camera is in use, based on attribute information of the second camera. The method may further include initiating the operation of the second camera, based on the determination that the second camera is in use.

In an embodiment, the initiating of the operation of the first camera may include determining whether a facing direction of the first camera determined based on the state information corresponds to a direction preset for the first camera. The initiating of the operation of the first camera may include, when the facing direction of the first camera corresponds to the preset direction, initiating the operation of the first camera. The initiating of the operation of the first camera may include, when the facing direction of the first camera does not correspond to the preset direction, initiating the operation of the second camera.

A computer-readable non-transitory recording medium according to an embodiment recording a computer program by which an electronic device including a plurality of cameras is executed to execute an application, and identify that a request for acquiring image data via a first camera among the plurality of cameras has been generated from the application. The computer program may be executed by the electronic device to, in response to the identified request, initiate an operation of the first camera to acquire image data to be provided to the application, based on that state information of the electronic device, which is related to the form of the electronic device, indicates a first state. The computer program may be executed by the electronic device to, in response to the identified request, initiate an operation of a second camera, among the plurality of cameras, to acquire image data to be provided to the application, based on that the state information indicates a second state.

In an embodiment, the request may include a first identifier indicating the first camera. The initiating of the operation of the second camera may include, in response to the request, changing an identifier for identifying a camera to be used to perform an operation corresponding to the request, from the first identifier to a second identifier assigned to the second camera, based on that the state information indicates the second state.

An electronic device according to various embodiments and an operation method therefor may operate an appropriate camera according to a state of the electronic device among a plurality of cameras. Even when an application utilizing the camera is designed without considering the deformation of a device's form, the electronic device and the operation method therefor may prevent a set camera from operating abnormally or from not operating normally.

Effects obtainable from the disclosure are not limited to the effects mentioned above, and other effects not mentioned may be clearly understood by those skilled in the art to which the disclosure pertains from the description below.

The methods according to the embodiments described in the claims or specification of the disclosure may be implemented in the form of hardware, software, or a combination of hardware and software.

In the case of being implemented by software, a computer-readable storage medium that stores one or more programs (software modules) may be provided. The one or more programs stored in the computer-readable storage medium are configured for execution by one or more processors within an electronic device. The one or more programs include instructions of allowing the electronic device to execute the methods according to the embodiments described in the claims or specification of the disclosure.

These programs (software modules and software) may be stored in random access memory, non-volatile memory including flash memory, read only memory (ROM), electrically erasable programmable ROM (EEPROM), magnetic disc storage device, compact disc-ROM (CD-ROM), digital versatile discs (DVDs) or other forms of optical storage devices, magnetic cassette. Alternately, the programs may be stored in a memory consisting of a combination of some or all of them. In addition, each consisting memory may be also included in plurality.

In addition, the program may be stored in an attachable storage device that may be accessed via a communication network such as Internet, intranet, local area network (LAN), wide LAN (WLAN), or storage area network (SAN) or a communication network consisting of a combination thereof. This storage device may be connected to a device performing an embodiment of the disclosure through an external port. In addition, a separate storage device on the communication network may be also connected to a device performing an embodiment of the disclosure.

In the specific embodiments of the disclosure described above, components included in the disclosure are expressed in the singular or plural form according to the specific embodiments presented. However, the expression of the singular or plural form is selected appropriately for the presented situation for the convenience of explanation, and the disclosure is not limited to singular or plural components, and even components expressed in the plural form may be constructed in the singular form, or even components expressed in the singular form may be constructed in the plural form.

In addition, in the disclosure, the terms "unit", "module", etc. may be hardware components such as processors or circuits, and/or software components executed by the hardware components such as processors.

"Unit" and "module" may be also implemented by a program that may be stored in an addressable storage medium and executed by the processor. For example, "unit" and "module" may be implemented by components such as software components, object-oriented software components, class components, and task components, processes, functions, attributes, procedures, subroutines, segments of a program code, drivers, firmware, microcode, circuits, data, databases, data structures, tables, arrays, and variables.

The specific executions described in the disclosure are only an embodiment, and do not limit the scope of the disclosure in any way. For the sake of brevity, descriptions of conventional electronic components, control systems, software, and other functional aspects of the systems may be omitted.

In addition, in the disclosure, "including at least one of a, b, or c" may mean "including only a", "including only b", "including only c", "including a and b", "including b and c", "including a and c", or "including all of a, b, and c".

Meanwhile, although the detailed description of the disclosure has described specific embodiments, it is undoubted that various modifications are possible without departing from the scope of the disclosure. Therefore, the scope of the disclosure should not be limited to the described embodiments, and should be defined not only by the scope of the claims described below but also by equivalents to the scope of the claims.

## Claims

1. An electronic device comprising:
a plurality of cameras;
a flexible display;
a processor; and
a memory for storing instructions,
wherein the instructions are executed by the processor so as to cause the electronic device to:
execute an application;
identify that a request for acquiring image data via a first camera among the plurality of cameras has been generated from the application;
in response to the identified request, initiate an operation of the first camera to acquire image data to be provided to the application, based on that state information of the electronic device, which is related to the form of the electronic device, indicates a first state; and
in response to the identified request, initiate an operation of a second camera, among the plurality of cameras, to acquire image data to be provided to the application, based on that the state information indicates a second state.

2. The electronic device of claim 1, wherein the request comprises a first identifier indicating the first camera, and
the instructions are executed by the processor so as to cause the electronic device to, in response to the request, change an identifier for identifying a camera to be used to perform an operation corresponding to the request, from the first identifier to a second identifier assigned to the second camera, based on that the state information indicates the second state.

3. The electronic device of claim 1, further comprising:
a first housing forming a first surface and a second surface opposite the first surface;
a second housing forming a third surface and a fourth surface opposite the third surface;
a folding part connecting the first housing and the second housing rotatably with respect to each other; and
a sensor for detecting a folding angle between the first housing and the second housing,
wherein the state information comprises information associated with the folding angle.

4. The electronic device of claim 3, wherein the first camera is arranged to capture an image through the first surface,
the second camera is arranged to capture an image through the second surface, and
the second state is that the folding angle is within a first angle range such that the first camera is covered by the second housing.

5. The electronic device of claim 4, further comprising:
an additional display at least partially arranged along the second surface of the first housing; and
the flexible display at least partially arranged along the first surface of the first housing and the third surface of the second housing,
wherein the instructions are executed by the processor so as to cause the electronic device to, in response to the identified request, initiate the operation of the second camera, based on that the state information indicates the second state and that a screen outputting a screen associated with the application is the additional display.

6. The electronic device of claim 1, wherein the instructions are executed by the processor so as to cause the electronic device to:
in response to the identified request, select the second camera from the plurality of cameras, based on that the state information indicates the second state,
determine whether the second camera corresponds to an attribute of the first camera, based on attribute information about the second camera;
when the second camera does not correspond to the attribute of the first camera, change the attribute information of the second camera; and
initiate the operation of the second camera, based on the changed attribute information.

7. The electronic device of claim 1, further comprising a plurality of displays,
wherein the instructions are executed by the processor so as to cause the electronic device to:
in a state in which the first camera is activated, display a screen via the flexible display;
identify that a display displaying the screen has changed from the flexible display to at least one of the plurality of displays; and
initiate the operation of the second camera, based on the change of the display displaying the screen.

8. The electronic device of claim 1, wherein the instructions are executed by the processor so as to cause the electronic device to:
identify the second camera assigned a first identifier indicating the first camera, based on that the state information indicates the second state;
determine whether the second camera is in use, based on attribute information of the second camera; and
initiate the operation of the second camera, based on the determination that the second camera is in use.

9. The electronic device of claim 1, wherein the instructions are executed by the processor so as to cause the electronic device to:
determine whether a facing direction of the first camera determined based on the state information corresponds to a direction preset for the first camera;
when the facing direction of the first camera corresponds to the preset direction, initiate the operation of the first camera; and
when the facing direction of the first camera does not correspond to the preset direction, initiate the operation of the second camera.

10. A method for operating an electronic device comprising a plurality of cameras, the method comprising:
executing an application;
identifying that a request for acquiring image data via a first camera among the plurality of cameras has been generated from the application;
in response to the identified request, initiating an operation of the first camera to acquire image data to be provided to the application, based on that state information of the electronic device, which is related to the form of the electronic device, indicates a first state; and
in response to the identified request, initiating an operation of a second camera, among the plurality of cameras, to acquire image data to be provided to the application, based on that the state information indicates a second state.

11. The method of claim 10, wherein the request comprises a first identifier indicating the first camera, and
the initiating of the operation of the second camera comprises, in response to the request, changing an identifier for identifying a camera to be used to perform an operation corresponding to the request, from the first identifier to a second identifier assigned to the second camera, based on that the state information indicates the second state.

12. The method of claim 10, wherein the electronic device further comprises:
a first housing forming a first surface and a second surface opposite the first surface;
a second housing forming a third surface and a fourth surface opposite the third surface;
a folding part connecting the first housing and the second housing rotatably with respect to each other; and
a sensor for detecting a folding angle between the first housing and the second housing,
wherein the state information comprises information associated with the folding angle,
the second state is that the folding angle is within a first angle range such that the first camera is covered by the second housing, and
the initiating of the operation of the second camera comprises, in response to the identified request, initiating the operation of the second camera, based on that the state information indicates the second state and that an additional display of the electronic device displays a screen associated with the application.

13. The method of claim 10, wherein the initiating of the operation of the second camera comprises:
in response to the identified request, selecting the second camera from the plurality of cameras, based on that the state information indicates the second state;
determining whether the second camera corresponds to an attribute of the first camera, based on attribute information about the second camera;
when the second camera does not correspond to the attribute of the first camera, changing the attribute information of the second camera; and
initiating the operation of the second camera, based on the changed attribute information.

14. The method of claim 10, further comprising:
identifying the second camera assigned a first identifier indicating the first camera, based on that the state information indicates the second state;
determining whether the second camera is in use, based on attribute information of the second camera; and
initiating the operation of the second camera, based on the determination that the second camera is in use.

15. A computer-readable non-transitory recording medium recording a computer program by which an electronic device comprising a plurality of cameras is executed to:
execute an application;
identify that a request for acquiring image data via a first camera among the plurality of cameras has been generated from the application;
in response to the identified request, initiate an operation of the first camera to acquire image data to be provided to the application, based on that state information of the electronic device, which is related to the form of the electronic device, indicates a first state; and
in response to the identified request, initiate an operation of a second camera, among the plurality of cameras, to acquire image data to be provided to the application, based on that the state information indicates a second state.
